# EUROPEAN PATENT APPLICATION

(11) **EP 4 342 971 A1**
(43) Date of publication of application: **27.03.2024**
(21) Application number: 23195215.1
(22) Date of filing: 04.09.2023
(51) Int. Cl.: C11D 7/26, C11D 7/34, C11D 7/50

(54) **REMOVER REAGENT FOR CURED SILICONE SEALANT AND METHOD USING SAME**

(30) Priority: 05.09.2022 CN 202211080736
(71) Applicant: Hangzhou Joinleader New Materials Co., Ltd., Hanzhou 310000 (CN)
(72) Inventor: FU, Cheng, Zhejiang, 310000 (CN); GE, Shengyu, Zhejiang, 310000 (CN); GUO, Huijun, Zhejiang, 310000 (CN); ZHAO, Liang, Zhejiang, 310000 (CN)
(74) Representative: Gilani, Anwar

(57) **Abstract**

The present disclosure provides a formula of a remover reagent for a cured silicone sealant and a method using the same. The remover reagent is prepared from an acid catalyst and a solvent each having a high boiling point and a high flash point. The acid catalyst is benzenesulfonic acid or alkylbenzenesulfonic acid. The solvent is mineral oil and/or silicone oil. The cured silicone sealant is first soaked with the remover reagent for 30 to 120 min, and then baked at a high temperature of 80 to 120°C for 10 min or above into debris or powder, whereby the cured silicone sealant with a thickness of 10 mm or above can be removed. Moreover, the remover reagent has the advantages of readily available raw materials, high safety, environmentally friendliness, convenient preparation and good sealant removal effect, and thus, has good application prospects.

## Description

### CROSS-REFERENCE TO RELATED APPLICATIONS

This application claims the priority of Chinese application No. 202211080736.5, filed on September 5, 2022, the specification, claims, abstract, and accompanying drawings of which are made a part hereof.

### BACKGROUND OF THE INVENTION

### Field of the Invention

The present disclosure belongs to the technical field of silicone sealants, and in particular to a formula of a remover reagent for a cured silicone sealant and a method using the same.

### Description of the Related Art

Room temperature vulcanizing (RTV) silicone sealants are a paste-like adhesive formed by mixing polysiloxane, a filler, a crosslinking agent, a coupling agent, a catalyst and other additives. Generally, they are cured when exposed to moisture. The cured silicone sealant can adhere to an adherend (such as glass, metals and some plastics). The cured silicone sealant is also called a silicone sealant, a cured silicone sealant, silicone or silicone rubber.

The crosslinked cured silicone sealant has a three-dimensional network structure and is non-polar. Even if non-polar solvents such as benzene and toluene are used, it can only swell but not dissolve. Moreover, the silicone sealant is weather resistance, chemical resistance, ultraviolet resistance and high/low temperature resistance, so it is difficult to dissolve and remove by conventional methods. Fortunately, the silicone sealant is not resistant to strong acids and bases, and siloxane bonds can be cleaved by acids and bases through catalysis, so we can try to remove the silicone sealant by using this principle.

The RTV silicone sealants are often cured at stainless steel parts (such as the inside of the discharge tube, the tube seam, the blades, the head of the discharge tube, joints between facilities) at some positions of production and filling facilities on the production line. These cured silicone sealants are difficult to remove, which affects the normal production progress of the silicone sealant production line. All the existing solutions are not satisfactory: If a scraper is used, the sealant may not be removed completely and may leave residues because there may be some places that the scraper cannot reach, and moreover, the user will do a large amount of work and may easily get injured hands. If a heating method is used, the parts need to be heated to 500°C or above to remove the silicone sealant, but the parts may expand with heat and contract with cold, causing dimensional changes, which makes the parts not able to be used any more. If the existing silicone sealant remover reagent products are used, these products may be dangerous because of low boiling point, or toxic because of some chemical components, or too troublesome to prepare because of complex formula, and may be prepared from raw materials that are not readily available. More importantly, the products of many formulae can only dissolve a small amount of thin silicone sealant layer or do not mention the amount of the silicone sealant dissolved. Moreover, few products mentioned whether there are residues left, which is very important for some specimens to which the sealant has been mistakenly applied and to which the sealant has to be re-applied (e.g., cured silicone gaskets that are formed by manually applying silicone). This is because the silicone sealant typically cannot adhere to the cured silicone sealant, and once the sealant is applied before the cured sealant on the specimen is not completely removed, this may lead to poor bonding and even adhesion failure. Therefore, it is necessary to develop a remover reagent product that can definitely remove cured silicone and leave no residues.

The current technology documented in patents or literature basically involves degrading polysiloxane by soaking the silicone sealant with a remover reagent and then dissolving the silicone sealant. Acids used typically include organic acids such as dodecylbenzenesulfonic acid and benzenesulfonic acid. Solvents include dichloromethane, C7 or so alkanes, benzene, toluene, octamethylcyclotetrasiloxane, etc. Means for removing sealants are simply soaking (or slightly heating to 60°C), and no corresponding methods had been developed. As a result, only a small amount of sealant can be removed, and the sealant at the bonding interface cannot be removed completely; and moreover, there are many toxic substances (such as carcinogenic benzene, reproductively toxic octamethylcyclotetrasiloxane, etc.), and substances with low boiling point or flash point, causing potential safety hazards.

CN111171966A discloses a remover reagent prepared from octamethylcyclotetrasiloxane, dodecylbenzenesulfonic acid and n-decane. However, every 20 g of remover reagent can dissolve only 0.16 g of silicone sealant in 2 h. This remover reagent can remove only a small amount of sealant after a long time of soaking, which is costly. Besides, the octamethylcyclotetrasiloxane is a controlled substance which is not commercially available, and it is reproductively toxic. Moreover, the n-decane has a low flash point (46°C), causing potential safety hazards. A remover reagent in CN105080373A is prepared from dodecylbenzenesulfonic acid, dichloromethane, C7 or so liquid hydrocarbons, and liquid paraffin. However, in this method, the amount of sealant removed is not mentioned, and the dichloromethane has a boiling point of only 39.8°C, which is likely to cause danger during the sealant removing process.

Therefore, it is urgent to develop an environmentally-friendly (no harmful substances), safe (high flash point and boiling point) and efficient (ability of quickly removing a large amount of sealant) remover reagent capable of completely removing the cured silicone sealant, which can remove a large amount of silicone sealant with a high thickness in combination with a corresponding method for removing the cured silicone sealant.

### BRIEF SUMMARY OF THE INVENTION

In order to solve the technical problems in the prior art, the present disclosure provides a formula of a remover reagent for a cured silicone sealant and a method using the same. The remover reagent is prepared from an acid catalyst and a solvent each having a high boiling point and a high flash point. The acid catalyst is benzenesulfonic acid or alkylbenzenesulfonic acid. The solvent is mineral oil and/or silicone oil. The cured silicone sealant is first soaked with the remover reagent for 30 to 120 min, and then baked at a high temperature of 80 to 120°C for 30 to 120 min or above into debris or powder, whereby the cured silicone sealant with a thickness of 10 mm or above can be removed. Moreover, the remover reagent has the advantages of readily available raw materials, high safety, environmentally friendliness, convenient preparation and good sealant removal effect, and thus, has good application prospects.

In one aspect, the present disclosure provides a remover reagent for a cured silicone sealant. The remover reagent includes an acid catalyst and a solvent. The acid catalyst and the solvent each have a boiling point of higher than 120°C and a flash point of higher than 100°C.

The "silicone sealant" herein may refer to the solid substance of a RTV silicone sealant (paste-like, such as a glass sealant for decoration, and a sealant for bonding stainless steel kitchen sinks and ceramic tiles, which may include liquid silicone rubber, a plasticizer silicone oil, a silane crosslinking agent, an organic tin catalyst and a fumed silica filler) after curing. The cured RTV silicone sealant has good adhesion to metals, glass and some plastics, and may also be called "cured silicone rubber", "silicone rubber" or "cured silicone sealant". The paste-like RTV silicone sealant in the present disclosure is also referred to as a silicone sealant, and the silicone sealant removed refers to the cured silicone sealant. The silicone sealant is a paste-like material that cures into a tough rubber solid once exposed to moisture in air, which may be classified into acetic type, dealcoholized type, ammonia-removed type and acetone-removed type. The silicone sealant is commonly known as the glass sealant because it is often used for bonding and sealing glass.

Most of the existing traditional remover reagents for a cured silicone sealant are toxic (e.g., containing toluene, xylene, octamethylcyclotetrasiloxane, etc.) and typically have a low boiling point (e.g., dichloromethane), so it is easy to cause potential safety hazards during the sealant removal process; and moreover, volatile gases are toxic to operators. In the formula of the remover reagent according to the present disclosure, the substances contained have a boiling point of higher than 120°C and even higher than 150°C, and a flash point of higher than 100°C, so the remover reagent is non-volatile and low in toxicity, thus is less dangerous.

The "flash point" refers to the lowest temperature at which a substance forms a mixture with outside air and ignites immediately when exposed to flame.

Moreover, with respect to a process for removing the cured silicone sealant, from the composition of the existing remover reagents, it can be known that the existing traditional remover reagents basically cannot be heated to a higher temperature, so the existing means for removing the cured silicone sealants are simply soaking (or slightly heating to 60°C, which cannot realize sealant removal by high temperature heating), and no corresponding methods had been developed. As a result, not all the sealant can be removed, and there are residues left. Typically, the sealant removal is always assisted by wiping with a wire sponge dipped with a solvent. However, wiping cannot remove the sealant in a special cavity structure with a small size (e.g., a long elbow tube). If there are special requirements for the surface coated with the sealant, wiping with the wire sponge may damage the surface, for example, causing scratches.

Based on the remover reagent, the present disclosure further designs a corresponding novel process for removing the cured silicone sealant. The cured silicone sealant is first soaked with the remover reagent for 30 to 120 min such that the cured silicone sealant swells but does not substantially dissolve, and then baked at a high temperature of 80 to 120°C into debris or powder, such that the cured silicone sealant is thoroughly removed. Since the swollen cured silicone sealant inevitably carries a small amount of remover reagent, if the remover reagent contains low-boiling or low-flash components, it is bound to be dangerous during the baking at high temperature (i.e., heating the low-boiling (low-flash) remover reagent will produce toxic vapor and have a risk of explosion). As a result, the remover reagent used with this process must have a high boiling point and a high flash point, so as to avoid danger while the swollen cured silicone sealant is baked at high temperature into debris or powder.

The "not substantially dissolve" here means that the remover reagent of the present disclosure may have a low dissolvability for silicone when soaking the cured silicone. That is, the cured silicone has an appropriate degree of dissolution in the remover reagent of the present disclosure, for example, 0.1 to 10% of cured silicone is dissolved in the remover reagent. Of course, the degree of dissolution varies with the time of soaking, and the thickness or mass of the cured silicone to be removed, but should be relatively low, so that the remover reagent of the present disclosure can be used many times.

According to the remover reagent for a cured silicone sealant provided in the present disclosure, the raw materials in the formula are readily available, and each component has a high boiling point and a high flash point. The cured silicone sealant soaked with the remover reagent can be baked at a high temperature of 80 to 120°C into debris or powder. The removal process is safe and stable, simple to operate, and can easily remove the cured silicone sealant with a thickness of 10 mm or above, thus having incomparable advantages over the existing remover reagents.

Further, the acid catalyst and the solvent each have the boiling point of higher than 150°C. The acid catalyst is benzenesulfonic acid or alkylbenzenesulfonic acid, and the solvent is mineral oil and/or silicone oil.

Further, the alkylbenzenesulfonic acid is one or more of methylbenzenesulfonic acid, ethylbenzenesulfonic acid, propylbenzenesulfonic acid, butylbenzenesulfonic acid and dodecylbenzenesulfonic acid.

According to the remover reagent provided in the present disclosure, based on the characteristic that the silicone sealant is not resistant to acid, the acid catalyst including one or both of benzenesulfonic acid and dodecylbenzenesulfonic acid is added to the formula to cleave silicon-oxygen bonds in the silicone sealant (including the bonding) and debond the bonding layer. Moreover, the solvent, including one or more of mineral oil, methyl silicone oil, methyl ethyl silicone oil, phenyl silicone oil, hydroxyl silicone oil, vinyl silicone oil, methyl phenyl silicone oil, etc., is used as the solvent to wet the silicone sealant so as to dissolve the silicone sealant. The key point of the formula is to make the remover reagent have a better wettability for the cured silicone sealant by means of using the solvent with a high boiling point and better wettability. After soaking, the organic acid promotes siloxane bond cleavage in the cured silicone sealant and at the bonding interface, such that the cured silicone sealant is degraded. By combining the soaking with the baking at high temperature, the cured silicone sealant can be removed easily and thoroughly.

The mineral oil and the silicone oil have better wettability for the cured silicone sealant than other solvents (e.g., benzene, dichloromethane, some alcohols, etc.) of the remover reagent (the mineral oil and the silicone oil are typically plasticizers for silicone sealants), and thus have good permeability in the silicone sealant. Moreover, the acid catalyst is easily soluble in mineral oil and silicone oil, so the mineral oil and the silicone oil can "carry" the acid catalyst into the silicone sealant, which is conducive to degradation and debonding of the silicone sealant during heating.

The mineral oil in the present disclosure is technical mineral oil, which can be used for preparing a plasticizer for the RTV silicone sealant. Technical mineral oil prepared by dewaxing, chemical refining or hydrogenation of petroleum lubricant fractions has a flash point of greater than 120°C. The mineral oil may be a specially refined mineral oil, which is colorless, odorless and chemically inert and has a basic composition of a saturated hydrocarbon structure, with a CAS number of 8042-47-5

The formula of the remover reagent provided in the present disclosure contains a minimum of only two substances, and these two substances are so compatible with each other that they only need to be stirred before use. However, the existing silicone sealant remover reagents usually contain many components, and some of them are complicated to prepare, for example, screen filtration may be required.

Therefore, even if this formula is only used for soaking the parts that need sealant removal, its removal effect is better than the existing remover reagents for a cured silicone sealant. 100 g of remover reagent can remove 2 to 3 g of cured silicone sealant at one time, while the existing remover reagents can only remove 0.6 g of cured silicone sealant.

Based on the characteristic that each of the components in this formula has a boiling point and a flash point (typically, there may be one or more components in the formula of the existing remover reagents that have a boiling point or flash point of lower than 80°C), a removal process in which the silicone sealant is soaked first and then baked at high temperature is developed. The acid catalyst and the high temperature can greatly promote silicon-oxygen bond cleavage, thereby causing degradation and even debonding of the silicone sealant. After the cured silicone sealant is soaked and baked at high temperature, the cured silicone sealant is powdered and then can be wiped off easily, so that a large amount of silicone sealant with a high thickness can be removed.

Further, the silicone oil is one or more of methyl silicone oil, methyl ethyl silicone oil, phenyl silicone oil, hydroxyl silicone oil, vinyl silicone oil or methyl phenyl silicone oil.

Further, the remover reagent includes the acid catalyst, the mineral oil and the silicone oil.

It is proved that when the solvent includes both the mineral oil and the silicone oil, the wettability of the solvent for the cured silicone sealant can be further improved, so that the cured silicone sealant can be quickly baked at high temperature into debris or powder, and removed more thoroughly. Experiments shows that a remover reagent containing silicone oil may gradually be separated into two layers after days of storage, leading to a greatly reduced removal effect. Therefore, if the remover reagent containing silicone oil is to be stored for a long time, it is required to convert the remover reagent into two components. The acid catalyst and the silicone oil need to be stored separately, and may be respectively mixed with the mineral oil(both can be stored stably with the mineral oil). Before use, the two components are mixed according to the ratio of the formula. This remover reagent usually needs to be used up in several days. Nevertheless, the formula according to the examples in the present disclosure is prepared when it is in need, so there is no problem involved in a two-component remover reagent.

Further, the remover reagent includes 10 to 50 parts by weight of the acid catalyst, 10 to 80 parts by weight of the mineral oil and 5 to 40 parts by weight of the silicone oil.

Further, the remover reagent includes 40 parts of benzenesulfonic acid, 40 parts of mineral oil and 20 parts of hydroxyl silicone oil.

In another aspect, the present disclosure provides a method for removing a cured silicone sealant using a remover reagent. The method includes the following steps:
(1) soaking the cured silicone sealant using the remover reagent as described above; and
(2) taking out the soaked cured silicone sealant, and baking the cured silicone sealant at a temperature of 80 to 120°C into debris or powder.

It is proved that only when the baking is carried out at the high temperature of 80°C or above, can the swollen cured silicone sealant be powdered. Of course, if the temperature of baking reaches 120°C or above, the cured silicone sealant can be powdered more effectively. However, since a safe and nontoxic formula of the remover reagent cannot have an ultrahigh boiling point and an ultrahigh flash point, if the temperature of the baking is too high, there will be potential safety hazards, and parts may be damaged. As a result, it safer and more reliable to control the temperature at 80 to 120°C or so.

Of course, the present disclosure does not mean that the baking can only be carried out at 80 to 120°C, and 79°C, 121°C, 122°C, etc. may also achieve the effect of the present disclosure. It is just required to substantially control the temperature of baking within the range of 80 to 120°C, so that the cured silicone sealant can be powdered safely and successfully, and thus can be removed more easily.

It should be noted that studies have shown that when the temperature is raised to 120°C, the metal parts typically will not become mismatched due to expansion with heat and contraction with cold, so the treated parts can continue to be used. Generally, what is removed here is the silicone sealant adhering to metal parts, but is not limited thereto, and it may also be the silicone sealant on any other materials (e.g., some special plastics and cemented carbide). After the silicone sealant on these materials is soaked with the remover reagent of the present disclosure, when high temperature heating is carried out, any temperature that can make the cured silicone sealant powdered without substantially damaging the material itself is feasible.

Further, the soaking in step (1) is carried out for 30 to 120 min.

The soaking time of the cured silicone sealant in the remover reagent is related to the swelling effect of the cured silicone sealant. If the soaking time is too short, it is difficult to completely swell the cured silicone sealant, causing unsatisfactory powdering effect. If the soaking time is too long, a large amount of the cured silicone sealant may have been dissolved in the remover reagent, which reduces the reusability of the remover reagent and causes waste. As a result, the appropriate soaking time is 30 to 120 min.

Further, the baking at high temperature in step (2) is carried out for at least 10 min.

Further, the baking at high temperature in step (2) is carried out for 30 to 120 min.

The removal process provided in the present disclosure includes: a specimen (metal) with a silicone sealant is soaked at room temperature for 30 min to 120 min, and then baked at 80 to 120°C for 30 min to 120 min. Since the remover reagent of the present disclosure has a high boiling point and a high flash point, it can be heated to 120°C, which greatly accelerates degradation of the silicone sealant. Therefore, not only the silicone sealant on the surface is baked into debris or powder (the baking also accelerates degradation and debonding of the silicone sealant, while the degradation rate of the silicone sealant by conventional dissolving is very low), but also the sealant with a thickness of more than 10 mm can be removed, thereby achieving the purpose of quickly removing a large amount of silicone sealant with a high thickness.

The time required for baking the cured silicone sealant into debris or powder is related to the thickness and amount of the cured silicone sealant, and typically may be 30 to 120 min or so, which depends on the actual situations.

Generally, the literature in the art basically does not mention the thickness of sealant removed, and only CN106554862A points out that the thickness of sealant removed can be up to 2.5 mm. By using the remover reagent and the corresponding process of the present disclosure, the cured silicone sealant with a thickness of about 10 mm can be directly and completely removed without leaving residues. When other traditional remover reagents are used, the sealant with a low thickness may not be directly and completely removed (e.g., there may be residues at the bonding layer). For a specimen to which the sealant has to be re-applied, these residues may make the re-applied sealant less effective, causing poor bonding strength and even adhesion failure of the fresh sealant. Typically, it is required to wipe with a wire sponge dipped with a solvent, can the residues be removed, which is too time-consuming and laborious. However, wiping basically cannot remove the sealant in a special cavity structure with a small size.

In yet another aspect, a mixture provided in the present disclosure is a remover reagent for removing a cured silicone sealant with a thickness of 10 mm or above. The mixture includes an acid catalyst and a solvent. The acid catalyst and the solvent each have a boiling point of higher than 120°C. A method of removing a cured silicone sealant using the remover reagent is as described above.

The remover reagent provided in the present disclosure can be heated to 120°C, which greatly accelerates degradation of the silicone sealant, thereby achieving the purpose of quickly removing a large amount of silicone sealant with a high thickness.

The remover reagent provided in the present disclosure can be reused, and thus, is more economical. For the existing remover reagents, the silicone sealant is completely dissolved in the liquid remover, during which the silicone sealant reduces the concentrations of effective components in the liquid remover, making the liquid remover unable to be reused. The remover reagent of the present disclosure just wets the silicone sealant and slightly dissolves the silicone sealant on the surface, so the concentrations of effective components are only slightly reduced, and the remover reagent can be used more times, thus making the remover reagent more economical. Moreover, the remover reagent of the present disclosure can thoroughly remove a large amount of silicone sealant, so that there is no need for silicone sealant factories to scrape off the silicone sealant, which saves both time and labor and makes the remover reagent suitable for large-scale use in factories. Of course, the remover reagent of the present disclosure may also be for personal use.

The remover reagent of the present disclosure basically does not corrode metals such as stainless steel and copper, glass, or the like if not contaminated by water. Whether other metals will be corroded when soaked or heated needs to be verified by specific experiments, but is readily available to those of ordinary skill in the art in conjunction with the contents of the present disclosure. This method only requires two sets of corresponding parts to which the silicone sealant easily adheres. When the sealant on one set is being removed, the other set is mounted to the facilities. This can basically avoid affecting continuous production of the silicone sealant factories.

In addition, for some sealant-carrying parts that cannot be heated, the sealant may be covered with a cloth soaked with the remover reagent and held for some time, and then a wire sponge dipped with mineral oil may be used to wipe off the sealant. If the sealant is too thick, the above operations may be repeated several times until the sealant is completely removed. An appropriate amount of filler such as silica may be added to the remover reagent and then mixed to obtain a thixotropic paste-like remover reagent, which may be applied to the surface of the object without sagging and is applicable to objects that cannot be soaked. After the thixotropic paste-like remover reagent is applied, the remover reagent is removed with a scraper (or baked), which can also obtain a good effect. This is a common method in the industry and will not be described in detail here.

The present disclosure has the following beneficial effects:
1. The remover reagent of the present disclosure is simple in formula and easy to prepare: The formula containing a minimum of only two or three substances can achieve the excellent sealant removal effect, and these substances are so compatible with each other that they only need to be stirred before use. However, the existing silicone sealant remover reagents usually contain many components, and some of them are complicated to prepare, for example, screen filtration may be required.
2. The raw materials are readily available and convenient for storage and transportation, and are safe and nontoxic: The acid catalyst, the mineral oil and the silicone oil can all be purchased directly. However, benzene, toluene, octamethylcyclotetrasiloxane and the like used in the existing remover reagents are controlled/dangerous chemicals, and are even carcinogenic or reproductively toxic, and they are subject to restrictions on purchase, transportation and storage, and thus, are not suitable for large-scale use and personal use either.
3. The remover reagent of the present disclosure has a boiling point and a high flash point, and can be heated to 120°C: All the components have a boiling point of higher than 150°C, so the remover reagent of the present disclosure also has a high boiling point and can be heated to 120°C. However, the existing remover reagents have a too low boiling point because of dichloromethane and benzene contained, which is not conducive to preparation and use, and moreover, the sealant basically cannot be removed by heating.
4. The remover reagent of the present disclosure is less toxic and more environmentally-friendly: In the formula of the remover reagent of the present disclosure, the components are basically nontoxic. However, in the formulae of other remover reagent, benzene, toluene and octamethylcyclotetrasiloxane are toxic substances, and dichloromethane is a polluting substance.
5. The remover reagent of the present disclosure is extremely friendly to the parts on which the sealant is to be removed: If the silicone sealant is thick, it must be soaked with a remover reagent for a longer time, which, however, may corrode the parts. However, the remover reagent of the present disclosure typically only needs to soak the parts once for a short time, which is more friendly to the parts on which the sealant is to be removed.
6. Operations are not dangerous: All the chemical components of the remover reagent of the present disclosure are high-boiling and non-controlled/dangerous substances, so the operations during preparation and use are not dangerous. However, the existing remover reagents may contain controlled/dangerous substances, or substances having a too low boiling point, or both, so careful operations are required.
7. The remover reagent of the present disclosure has good sealant removal effect, and can completely remove the cured silicone sealant with a thickness of 10 mm or above without leaving residues: The remover reagent and the corresponding process for removing a cured silicone sealant according to the present disclosure can remove a large amount of silicone sealant with a high thickness of up to 10 mm or above, and can remove the silicone sealant with a volume equivalent to that of the remover reagent itself; and a large amount of silicone sealant with a high thickness can be baked into debris or powder, and then wiped off, so that the silicone sealant can be completely removed without leaving residues. However, the remover reagent in the prior art can only remove a small amount of silicone sealant with a low thickness, and there may be many residues left on the bonding surface.
8. The remover reagent of the present disclosure is reusable, and thus, is more economical and labor-saving: According to the process in the present disclosure, the silicone sealant can be removed simply by soaking the part of the specimen with the silicone sealant for some time and then baking. Only a part of the remover reagent is lost when swelling the silicone sealant, and the remaining remover reagent can still be used many times. However, with the existing remover reagents, a typical method is to directly soak the silicone sealant with the remover reagent until the silicone sealant is completely dissolved in the remover reagent, and the remaining remover reagent will become more and more ineffective in subsequent use, and can be used only a few times.
9. The remover reagent of the present disclosure has wide applicability: The remover reagent of the present disclosure is applicable to most places where an adhering silicone sealant needs to be dissolved. It is suitable for large-scale silicone sealant factories and insulating glass factories, for various factories and situations where the sealant needs to be removed, and also for personal use.

### BRIEF DESCRIPTION OF THE DRAWINGS

FIG. 1 is a picture showing an untreated state of a glass sealant cured on stainless steel substrates according to Example 2;
FIG. 2 is a picture showing a state of the cured glass sealant on the stainless steel substrates after soaked and slightly stirred with a glass rod according to Example 2;
FIG. 3 illustrates pictures showing a state of the cured glass sealant on the stainless steel substrates after soaked and baked at high temperature into debris and powder according to Example 2; and
FIG. 4 illustrates pictures showing related experimental effects of sealant removal in a glass tube according to Example 2, where the left picture shows a state after baking, the middle picture shows a state after sealant removal for a first time, which shows that almost all the sealant has removed except for some residues, and the right picture shows a state after sealant removal by soaking and baking for a second time, which shows that the glass tube is as clean as new.

### DETAILED DESCRIPTION OF THE INVENTION

The present disclosure will be further described in detail below with reference to the examples. It should be noted that the following examples are intended to facilitate the understanding or maintaining of the present disclosure and do not limit the present disclosure in any way. The reagents not specified in this example are all known products that are commercially available.

### Example 1: Preparation of remover reagent for cured silicone sealant provided in the present disclosure and corresponding process for removing cured silicone sealant

A formula of the remover reagent for a cured silicone sealant provided in this example was as follows:

The remover reagent included 10 to 50 parts by weight of acid catalyst, 10 to 80 parts by weight of mineral oil and/or 5 to 40 parts by weight of silicone oil. The acid catalyst was benzenesulfonic acid or dodecylbenzenesulfonic acid, preferably benzenesulfonic acid in this example. The silicone oil was methyl silicone oil, methyl ethyl silicone oil, phenyl silicone oil, hydroxyl silicone oil, vinyl silicone oil or methyl phenyl silicone oil, preferably methyl silicone oil in this example. Preferably, the remover reagent included both the mineral oil and the silicone oil. The mineral oil has been briefly described above.

Therefore, the formula of the remover reagent provided in this example preferably included 40 parts by weight of benzenesulfonic acid, 40 parts by weight of mineral oil(3# mineral oil, Jinan Junteng Chemical Co., Ltd., the same below), and 20 parts by weight of methyl silicone oil (100mPa•s, Lvlian (lining) Chemical Technology Co., Ltd., Model QL-200 DM 100, the same below). The remover reagent was prepared by simply stirring and mixing 40 parts of benzenesulfonic acid, 40 parts of mineral oil and 20 parts of methyl silicone oil uniformly( part by weight).

The process for removing a cured silicone sealant provided in this example included:

The remover reagent was poured into an appropriate container. A stainless steel sheet coated with a glass sealant (i.e., a conventional commercially available single-component acetic silicone sealant, JL600 GP PREMUIM ACETIC SILICONE SEALANT from Saint-Gobain Joinleader (Hangzhou) New Materials, the same below) with a thickness of 12 mm was allowed to stand or maintain for 14 d to obtain a stainless steel part on which the glass sealant had been completely cured. The part with the sealant was soaked in the remover reagent for 30 min to 120 min (preferably 80 min in this example), taken out, and baked at 80 to 120°C (preferably 100°C in this example) for 30 min to 120 min (preferably 80 min in this example). The remover reagent was placed back to the container, and then covered. After baked, the surface of the silicone sealant cracked and was powdered. All the silicone sealant could be wiped off with a cloth dipped with mineral oil or silicone oil without leaving glass sealant residues on the surface of the stainless steel sheet.

### Example 2: Effects of remover reagent and corresponding process for removing cured silicone sealant provided in the present disclosure

This example used the acetic silicone sealant in Example 1. The silicone sealant was applied on specific substrates, cured, and subjected to a sealant removal experiment, so as to simulate the situation of various stainless steel parts with the sealant to be removed in a silicone sealant factory.

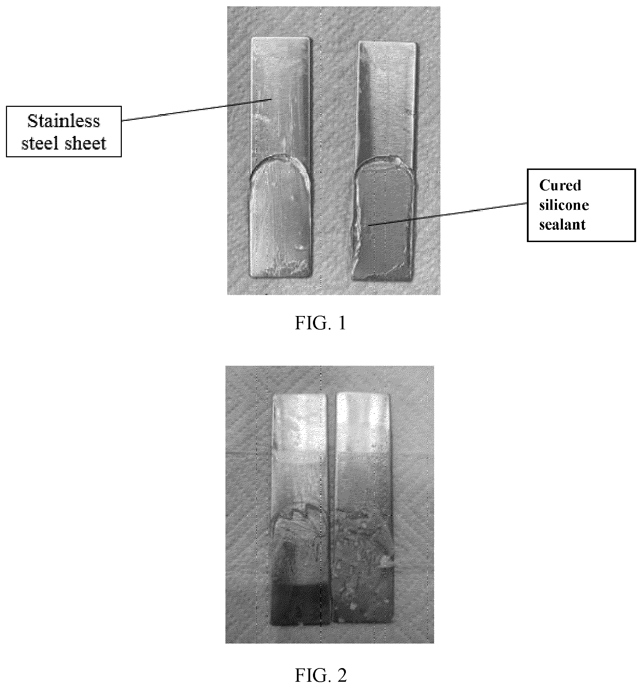

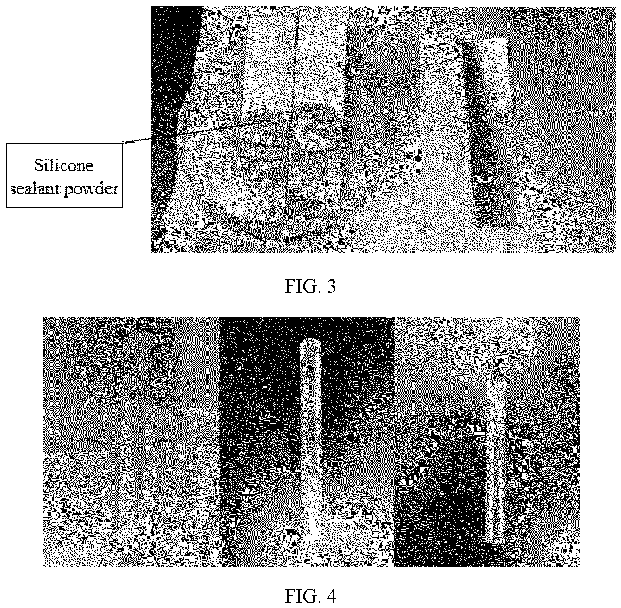

In order to simulate the situation of stainless steel parts with the sealant to be removed on the surface, stainless steel substrates were coated with the glass sealant with a thickness of about 3 mm and allowed to stand or maintain for 7 d until the glass sealant was completely cured. The specimens are shown in FIG. 1. The stainless steel substrates with the cured glass sealant (the parts with the cured glass sealant) were completely immersed in the optimal remover reagent prepared according to Example 1, and soaked for 120 min. At this time, only the surface of the sealant was dissolved. The sealant was stirred with a glass rod, and it was found that the silicone sealant still adhered to the stainless steel at the bonding interface and the cured silicone could not be removed from the surface of the stainless steel. The pictures are shown in FIG. 2. As can be seen from FIG. 2, the coating of the silicone sealant became thinner and no longer transparent, and even after the coating was wiped, there were still residues on part of the bonding interface. Two substrates that had been soaked were baked in an oven at 120°C for 1 h, and taken out, as shown in FIG. 3. It was found that the silicone sealant had become debris or powder (the debris could be ground into powder easily), and after the substrates were wiped, there were no residues left and the substrates were as clean as new (traces in the right picture are illustrative and can be removed completely).

In order to simulate the situation of removal of the silicone sealant in a hollow stainless steel tube, the glass sealant was injected into a hollow glass tube having a length of 80 mm and a diameter of 9 mm. After the glass sealant was cured for one week, the hollow glass tube was soaked in the remover reagent for 2 h, taken out, baked in an oven at 120°C for 2 h, and taken out. It was found that the glass sealant on two ends of the hollow tube was powdered, and there was an obvious "crack" 20 mm from the end of the hollow tube. The powdered part was removed: the cured sealant that had cracked on the two ends could be picked out with a glass rod. What was left in the middle of the hollow tube was the uncured silicone sealant. The uncured silicone sealant could be squeezed out with the glass rod assisted by a thin cloth dipped with silicone oil. At this time, there was still some cured silicone sealant inside the glass tube. This was because the glass tube was too long and too thin, so that the remover reagent could not completely go inside the silicone sealant and some cured silicone sealant could not be dissolved. Then, the glass tube was soaked with the remover reagent and baked a second time, and slightly cleaned. It was found that the glass tube became as clean as new. This single-component glass sealant can be cured when exposed to moisture. However, in a special environment (glass tube), only the glass sealant on two ends can be cured. As the depth of the glass sealant increases, the moisture is isolated, and the curing becomes more and more difficult. Therefore, only the glass sealant with a length of about 20 mm on the two ends was cured, and the glass sealant in the middle was not cured. Considering the wettability of the remover reagent for the silicone sealant, even if the silicone sealant was cured deeper, the silicone sealant can also be degraded and powdered easily by heating such that the silicone sealant was removed completely (if the silicone sealant was not removed completely, the operations could be repeated until the silicone sealant was removed completely). This experiment successfully simulated the situation of sealant removal in a special metal tube. The experiment showed that the remover reagent could remove the silicone sealant with a thickness of at least 10 mm. FIG. 4 illustrates pictures showing related experimental effects. The left picture shows a state after baking. The middle picture shows a state after sealant removal for a first time, which shows that almost all the sealant has removed except for some residues. The right picture shows a state after sealant removal for a second time, which shows that the glass tube is as clean as new. The glass tube was slightly damaged during cleaning because it was too thin. As a result, the glass tube after cleaned does not look exactly the same as before the experiment. For an actual hollow tube with a large diameter, a channel can be made throughout the silicone sealant first, and then the hollow tube is soaked in the remover reagent and baked. In this way, the silicone sealant can be completely removed by one sealant removal process.

Based on the above, if a long hollow stainless steel tube is filled with the silicone sealant, the cured silicone sealant can be powdered and removed by the sealant removal process provided in the present disclosure. For the remaining uncured silicone sealant, first, one end of the steel tube is filled with a cloth dipped with silicone oil, and then the cloth is pushed by a slender metal rod such that the uncured silicone sealant is squeezed out. After that, the steel tube is slightly cleaned to obtain a clean metal part. If the silicone sealant is not removed thoroughly, the sealant removal process can be repeated until the steel tube is as clean as new.

### Example 3: Influence of different acid catalysts on sealant removal effects

This example used the remover reagent for a cured silicone sealant prepared by the method provided in Example 1. 40 parts of 3 different acid catalysts shown in Table 1 were respectively used, and then 40 parts of mineral oil and 20 parts of methyl silicone oil were added to obtain 3 remover reagents. Stainless steel sheets (KunshanMingxuming Metal Materials Co., Ltd., made of 304 stainless steel) coated with the glass sealant (JL600 GP PREMUIM ACETIC SILICONE SEALANT from Saint-Gobain Joinleader (Hangzhou) New Materials) with a thickness of 12 mm were allowed to stand or maintain for 14 d until the glass sealant was completely cured. The stainless steel sheets were respectively soaked in the 3 remover reagents for 100 min, taken out, and tested for their swelling effect. Then, the stainless steel sheets were baked at 100°C for 80 min, and observed for their powdering effect. The method for testing the swelling effect included: The parts that had been soaked for 100 min were taken out, and cut longitudinally in half. The thickness of the cured silicone sealant that had not swollen was measured along the longitudinal section with a ruler (the swollen cured silicone sealant appeared white). The thickness of the swollen sealant is the original thickness of the sealant minus the thickness of the swollen sealant. The influence of different acid catalysts on sealant removal effects was tested. The results are shown in Table 1.

**Table 1 Influence of different acid catalysts on sealant removal effects**

| Acid catalyst | Swelling effect after 100 min of soaking | Powdering effect after baking at high temperature |
|---|---|---|
| Benzenesulfonic acid | Completely swelled | Completely powdered |
| Dodecylbenzenesulfonic acid | Completely swelled | Completely powdered |
| Sulfuric acid | After 100 min of soaking, only 2 mm-thick sealant on the surface swelled, and the inside of the sealant was not | Only the surface of the sealant was powdered |
| | wetted completely | |

As can be seen from Table 1, the remover reagents prepared from different acids may directly influence the swelling of the cured silicone sealant during soaking. The use of the benzenesulfonic acid or the dodecylbenzenesulfonic acid helps in improving the swelling effect after soaking. The acid catalyst is most preferably the benzenesulfonic acid. The remover reagent with the benzenesulfonic acid can make the cured silicone sealant swell quickly, and can remove the cured silicone sealant with a thickness of 12 mm or above. The sulfuric acid is a controlled substance that is not readily available, and moreover, it is dangerous when it is used in the preparation of the remover reagent.

### Example 4: Influence of different solvents on sealant removal effects

This example used the remover reagent for a cured silicone sealant prepared by the method provided in Example 1. 40 parts of benzenesulfonic acid serving as the acid catalyst and 4 solvents shown in Table 2 were used to obtain 6 remover reagents. Stainless steel sheets coated with the glass sealant (JL600 GP PREMUIM ACETIC SILICONE SEALANT from Saint-Gobain Joinleader (Hangzhou) New Materials) with a thickness of 12 mm were allowed to stand or maintain for 14 d to obtain stainless steel parts on which the glass sealant had been completely cured. The stainless steel parts were respectively soaked in the 6 remover reagents for 100 min, taken out, baked at 100°C for 120 min, and tested for the swelling effect of the cured silicone sealant. The test method was the same as in Example 3. The influence of different solvents on sealant removal effects was tested. The results are shown in Table 2.

**Table 2 Influence of different solvents on sealant removal effects (in parts by weight)**

| No. | Solvent | Swelling effect after 100 min of soaking |
|---|---|---|
| 1 | 60 parts of mineral oil | Only 5 mm-thick cured silicone sealant on the surface swelled |
| 2 | 60 parts of hydroxyl silicone oil | Only 6 mm-thick cured silicone sealant on the surface swelled |
| 3 | 60 parts of methyl silicone oil | Only 8 mm-thick cured silicone sealant on the surface swelled |
| 4 | 40 parts of mineral oil+20 parts of hydroxyl silicone oil | Completely swelled |
| 5 | 40 parts of mineral oil+20 parts of methyl silicone oil | Completely swelled |
| 6 | 60 parts of diisononyl phthalate | Only 1 mm-thick cured silicone sealant on the surface swelled |

As can be seen from Table 2, different solvents may influence the complete swelling of the cured silicone sealant to a certain degree. The removal reagent using the combination of the mineral oil and the silicone oil as the solvent has a better wettability on the cured silicone sealant, and can make the cured silicone sealant with a thickness of 10 mm or above swell completely and even make the inside of the cured silicone sealant swell. With this regard, the solvent is preferably the combination of the mineral oil and the silicone oil, most preferably the combination of the mineral oil and the methyl silicone oil. In this case, after soaked in the remover reagent for 50 min, the cured silicone sealant with a thickness of 12 mm can completely swell.

### Example 5: Influence of different temperatures of baking on sealant removal effects

This example used the remover reagent for a cured silicone sealant prepared by the method provided in Example 1. 40 parts by weight of benzenesulfonic acid, 40 parts by weight of mineral oil and 20 parts by weight of methyl silicone oil were mixed uniformly to obtain the remover reagent. Stainless steel sheets coated with the glass sealant (JL600 GP PREMUIM ACETIC SILICONE SEALANT from Saint-Gobain Joinleader (Hangzhou) New Materials) with a thickness of 12 mm were allowed to stand or maintain for 14 d to obtain stainless steel parts on which the glass sealant had been completely cured. The stainless steel parts were soaked in the remover reagent for 80 min, taken out, and baked respectively at 40, 60, 80, 100 and 120°C for 120 min. The influence of different temperatures of baking on sealant removal effects was tested. The results are shown in Table 3.

**Table 3 Influence of different temperatures of baking on sealant removal effects**

| Temperature (°C) | State after baking |
|---|---|
| 40 | No significant changes |
| 60 | No significant changes |
| 70 | Slightly powdered on the edge |
| 80 | The surface of the cured silicone sealant cracked and was powdered |
| 120 | The surface of the cured silicone sealant cracked severely, and the cured silicone sealant was completely powdered |

As can be seen from Table 3, different temperatures of baking may directly influence the effect of baking. Only when the temperature reaches 80°C or above, can the cured silicone sealant be powdered. When the temperature is lower than 80°C, there are no significant changes on the surface of the cured silicone sealant. Of course, if the temperature continues increasing, the powdering effect may be better, but the temperature may approach the boiling point, and even significantly exceed the flash point of the components of the remover reagent, causing potential safety hazards. Therefore, the temperature of baking should be controlled at 80 to 120°C.

All patents and publications mentioned in the specification of the present disclosure indicate that these are technologies disclosed in the art, which could be used in the present disclosure. All patents and publications cited herein are also listed in the references as if each publication is specifically and individually referenced. The present disclosure described herein may be realized in the absence of any one or more elements and one or more limitations, and such limitations are not specified herein. For example, for the terms "including", "consisting essentially of" and "consisting of" used herein in each example, one of them may be replaced by either of the remaining two. The so-called "a (an)" used herein only means "one", does not exclude the inclusion of only one, but also means the inclusion of more than two. The terms and expressions used herein are descriptive without limitation, and it is no intended herein that these terms and explanations described in this specification exclude any equivalent features. However, it could be known that any suitable changes or modifications may be made within the scope of the present disclosure and the claims. It can be understood that all the examples described in the present disclosure are some of preferred examples and features, and those of ordinary skill in the art may make some variations and alternations according to the essence of the present disclosure. These variations and alternations are also considered to fall within the scope of the present disclosure and the scope defined by the independent claims and the dependent claims.

## Claims

1. A remover reagent for a cured silicone sealant, **characterized by** comprising an acid catalyst and a solvent, and the acid catalyst and the solvent each having a boiling point of higher than 120°C and a flash point of higher than 100°C.

2. The remover reagent according to claim 1, **characterized in that** the acid catalyst and the solvent each have the boiling point of higher than 150°C; and the acid catalyst is benzenesulfonic acid or alkylbenzenesulfonic acid, and the solvent is mineral oil and/or silicone oil.

3. The remover reagent according to claim 2, **characterized in that** the alkylbenzenesulfonic acid is one or more of methylbenzenesulfonic acid, ethylbenzenesulfonic acid, propylbenzenesulfonic acid, butylbenzenesulfonic acid and dodecylbenzenesulfonic acid.

4. The remover reagent according to any of claims 2 to 3, **characterized in that** the silicone oil is one or more of methyl silicone oil, methyl ethyl silicone oil, phenyl silicone oil, hydroxyl silicone oil, vinyl silicone oil or methyl phenyl silicone oil.

5. The remover reagent according to any of claims 2 to 4, **characterized in that** the mineral oil has a basic composition of a saturated hydrocarbon structure, with a CAS number of 8042-47-5.

6. The remover reagent according to any of claims 1 to 5, **characterized by** comprising the acid catalyst, the mineral oil and the silicone oil; wherein the remover reagent comprises 10 to 50 parts by weight of the acid catalyst, 10 to 80 parts by weight of the mineral oil and 5 to 40 parts by weight of the silicone oil.

7. The remover reagent according to any of claims 1 to 7, **characterized by** comprising the acid catalyst, the mineral oil and the silicone oil; wherein the remover reagent comprises 40 parts by weight of the acid catalyst, 40 parts by weight of the mineral oil and 20 parts by weight of the silicone oil.

8. The remover reagent according to any of claims 1 to 7, **characterized in that** the acid catalyst has the boiling point of higher than 120°C, and the solvent has the flash point of higher than 100°C.

9. A method for removing a cured silicone sealant using a remover reagent, **characterized by** comprising the following steps:
(1) soaking an object with the cured silicone sealant using the remover reagent according to any of claims 1 to 8; and
(2) taking out the soaked object with the cured silicone sealant, and baking the cured silicone sealant on the object at a temperature of 80°C or above into debris or powder.

10. The method according to claim 9, **characterized in that** the soaking in step (1) is carried out for 30 to 120 min.

11. The method according to claim 9, **characterized in that** the baking at high temperature in step (2) is carried out for at least 10 min.

12. The method according to claim 9, **characterized in that** the cured silicone sealant is a room temperature vulcanizing (RTV) silicone sealant.

13. The method according to claim 12, **characterized in that** the high temperature is 80 to 120°C.

14. The method according to claim 9, **characterized in that** the object is metal, glass object or plastic.

15. The method according to claim 14, **characterized in that** the metal object is made of stainless steel.
